# EUROPÄISCHE PATENTSCHRIFT

(11) **EP 3 329 286 B1**
(45) Veröffentlichungstag und Bekanntmachung des Hinweises auf die Patenterteilung: **09.02.2022**
(21) Anmeldenummer: 16766504.1
(22) Anmeldetag: 06.09.2016
(51) Int. Cl.: G01P 21/00, B61F 99/00

(54) **VERFAHREN ZUR ERKENNUNG EINES DEFEKTS EINES BESCHLEUNIGUNGSSENSORS UND MESSSYSTEM**
METHOD FOR DETECTING A DEFECT IN AN ACCELERATION SENSOR AND MEASURING SYSTEM
PROCÉDÉ DE DÉTECTION D'UNE DÉFAILLANCE D'UN CAPTEUR D'ACCÉLÉRATION ET SYSTÈME DE MESURE

(30) Priorität: 30.09.2015 DE 102015218941
(43) Veröffentlichungstag der Anmeldung: 06.06.2018
(73) Patentinhaber: Siemens Mobility GmbH, 81739 München (DE)
(72) Erfinder: KITZMÜLLER, Christian, 8010 Graz (AT); KNOLL, Markus, 90429 Nürnberg (DE); RACKL, Hugo, 8046 Stattegg (AT); SCHROEDER-BODENSTEIN, Kaspar, 40547 Düsseldorf (DE)
(86) Internationale Anmeldenummer: PCT/EP2016/070946
(87) Internationale Veröffentlichungsnummer: WO 2017/055022

(56) Entgegenhaltungen:
- EP-A1- 1 698 903
- EP-A2- 2 317 328
- DE-A1- 19 844 880
- DE-A1-102013 210 081
- US-A1- 2003 038 537
- US-A1- 2013 133 422

## Beschreibung

Die Erfindung betrifft ein Verfahren zur Erkennung eines Defekts eines Beschleunigungssensors.

Beschleunigungssensoren werden in vielen technischen Bereichen eingesetzt. Zum Beispiel kann ein Beschleunigungssensor in einem Fahrzeug eingesetzt werden, um die Sicherheit des Fahrzeugs zu erhöhen.

In einem Schienenfahrzeug kann beispielsweise mittels eines Beschleunigungssensors eine Querbeschleunigung des Schienenfahrzeugs bzw. eines einzelnen Wagens gemessen werden, insbesondere um den sogenannten Sinuslauf des Schienenfahrzeugs zu überwachen. Unter dem Sinuslauf eines Schienenfahrzeugs, auch Wellenlauf genannt, kann eine Schwingung des Schienenfahrzeugs um seine ideale Fahrlinie verstanden werden. Diese Schwingung kann durch (annähernd) konische, nach außen hin verjüngende, über eine Achse starr gekoppelte Räder verursacht werden und tritt insbesondere bei hohen Geschwindigkeiten des Schienenfahrzeugs auf. Stehen die Räder außermittig auf zwei parallelen Schienen, rollt das nach außen versetzte Rad mit einem größeren Umfang ab, sodass die Achse einlenkt. Das Schienenfahrzeug bzw. der Wagen erfährt eine Querbeschleunigung. Hohe Querbeschleunigungen können zu Radverschleiß und/oder Gleisschädigungen führen. Bei hohen Querbeschleunigungen besteht sogar die Gefahr des Entgleisens.

Mittels eines Beschleunigungssensors kann die Querbeschleunigung eines Fahrzeugs gemessen werden und vor hohen Beschleunigungswerten gewarnt werden, um z.B. die Sicherheit der Insassen des Fahrzeugs zu gewährleisten und/oder im Falle eines Schienenfahrzeugs einer Beschädigung der Gleise vorzubeugen.

Jedoch kann ein Beschleunigungssensor einen Defekt aufweisen, beispielsweise aufgrund eines Drahtbruchs innerhalb des Sensors, und folglich fehlerhafte Signale liefern. Fehlerhafte Signale können beispielsweise zu einer Fehlwarnung führen, d.h. es wird eine Warnung ausgegeben, obwohl keine kritische Situation vorliegt. Weiter können fehlerhafte Signale dazu führen, dass kritische Situationen nicht erkannt werden und demzufolge fälschlicher Weise keine Warnung ausgegeben wird. Deshalb ist es wichtig, einen Defekt eines Beschleunigungssensors zu erkennen.

DE 198 44 880 A1 beschreibt ein Verfahren zur Überwachung eines in einem Fahrzeug angeordneten Beschleunigungssensors, mit dem eine Beschleunigungsgröße, die eine auf das Fahrzeug wirkende Beschleunigung beschreibt, erfasst wird.

DE 10 2013 210 081 A1 beschreibt ein Verfahren zur Überwachung eines Schienenfahrzeugs. Bei dem Verfahren wird zumindest ein Messwert einer momentanen Beschleunigung des Schienenfahrzeugs erfasst. Der Messwert der Beschleunigung wird mit einem vorgegebenen Vergleichswert der Beschleunigung des Schienenfahrzeugs verglichen. Der Vergleichswert der Beschleunigung wird in Abhängigkeit der Position des Schienenfahrzeugs im Streckennetz vorgegeben. Ein Signal, welches eine Gefahrensituation wiedergibt, wird bei einer Abweichung des Messwerts vom Vergleichswert um ein vorgegebenes Maß generiert.

Eine Aufgabe der vorliegenden Erfindung ist es, ein Verfahren anzugeben, mit dem ein Defekt eines Beschleunigungssensors zuverlässig erkannt werden kann.

Diese Aufgabe wird durch ein Verfahren zur Erkennung eines Defekts eines Beschleunigungssensors gelöst, bei dem erfindungsgemäß der Beschleunigungssensor ein Signal erzeugt, bei einer Prüfung geprüft wird, ob eine vom Signal abhängige Größe eine vorgegebene Bedingung bezüglich eines Referenzwerts erfüllt, und anhand der Prüfung ermittelt wird, ob der Beschleunigungssensor defekt ist.

Anhand der Prüfung wird geprüft, ob die vom Signal des Beschleunigungssensors abhängige Größe plausibel ist. Durch das erfindungsgemäße Verfahren kann ein Defekt des Beschleunigungssensors zuverlässig und insbesondere frühzeitig erkannt werden. Im Falle eines Defekts des Beschleunigungssensors kann dieser dann ausgeschaltet, repariert und/oder ausgetauscht werden. Auf diese Weise wird zweckmäßigerweise die Verfügbarkeit eines plausiblen Signals des Beschleunigungssensors sichergestellt.

Die Prüfung, ob die vom Signal abhängige Größe die vorgegebene Bedingung erfüllt, kann durch eine Überwachungseinheit erfolgen. In der Überwachungseinheit kann beispielsweise eine Software für die Durchführung der Prüfung hinterlegt sein. Die Überwachungseinheit empfängt das vom Beschleunigungssensor erzeugte Signal und/oder die vom Signal abhängige Größe vorzugsweise mittelbar oder unmittelbar vom Beschleunigungssensor.

Die Größe kann unter anderem ein Signalwert, d.h. ein Wert des vom Beschleunigungssensor erzeugten Signals sein. Zweckmäßigerweise ist das Signal ein Spannungssignal. Das heißt, die Größe kann eine Spannung bzw. ein Spannungswert sein.

Vorzugsweise ist die vom Signal abhängige Größe eine anhand des Signals ermittelte Beschleunigung (bzw. ein anhand des Signals ermittelter Beschleunigungswert).

Anders als bei einer Methode, bei der z.B. ein Spannungsoffset des Beschleunigungssensors überwacht wird, ermöglicht die Prüfung der anhand des Signals ermittelten Beschleunigung eine zuverlässige Prüfung. Denn bei einem Defekt des Beschleunigungssensors kann der Beschleunigungssensor zwar eine korrekte Offsetspannung aber einen fehlerhaften Beschleunigungswert (z.B. immer Null) liefern.

Alternativ kann die Größe eine andere aus dem Signal des Beschleunigungssensors abgeleitete bzw. ermittelte Größe sein. Sinnvollerweise ist der Referenzwert ein Wert derselben physikalischen Größe.

Es ist vorteilhaft, wenn die vom Signal abhängige Größe eine durch Mitteln mehrerer zeitlich aufeinanderfolgender Signalwerte berechnete Größe ist. Das bedeutet, dass vorzugsweise mehrere zeitlich aufeinanderfolgende Signalwerte gemittelt werden, insbesondere bevor die Prüfung durchgeführt wird. Durch das Mitteln kann das Signal geglättet werden. Vorzugsweise ist eine Zeitspanne, für welche die Mittelung durchgeführt wird, vorgebbar.

Die Mittelung kann z.B. eine quadratische Mittelung sein. Weiter kann die Mittelung eine arithmetische Betrags-Mittelung sein. Bei der arithmetischen Betrags-Mittelung wird zweckmäßigerweise zunächst der Betrag eines jeden Signalwerts gebildet und dann eine arithmetische Mittelung mehrerer Signalwerte durchgeführt. Weiterhin kann die Mittelung eine sogenannte gleitende Mittelung sein, d.h. es kann zu jedem Signalwert ein gleitender Mittelwert berechnet werden. Der Referenzwert kann von der Art der Mittelung abhängig sein.

In einer bevorzugten Ausgestaltung der Erfindung wird das Signal des Beschleunigungssensors mithilfe eines Filters gefiltert. Ferner wird die Prüfung vorteilhafterweise für das gefilterte Signal durchgeführt. Das heißt, dass das Filtern des Signals vorzugsweise vor der Prüfung durchgeführt wird. Das Filtern des Signals erfolgt vorzugsweise vor dem Mitteln der Signalwerte.

Sinnvollerweise ist der Beschleunigungssensor in einem beweglichen Objekt angeordnet. Durch das Filtern des Signals können diejenigen Frequenzen und/oder Frequenzbänder, in denen keine mechanischen Schwingungen des Objekts zu erwarten sind, abgeschwächt werden. Ferner können/kann durch das Filtern Störfrequenzen und/oder eine Offset-Spannung im Signal abgeschwächt bzw. aus dem Signal herausgefiltert werden. Weiter kann durch ein Filtern des Signals ein Signalrauschen reduziert werden. Auf diese Weise kann eine Auswertung des Signals und/oder eine Berechnung einer Beschleunigung erleichtert werden.

Vorzugsweise ist der Filter ein Bandpassfilter. Zweckmäßigerweise lässt der Bandpassfilter denjenigen Frequenzbereich passieren, in welchem mechanische Schwingungen des besagten Objekts zu erwarten sind. Mittels eines Bandpassfilters können diejenigen Frequenzen und/oder Frequenzbänder abgeschwächt bzw. aus dem Signal herausgefiltert werden, in denen keine mechanischen Schwingungen des Objekts zu erwarten sind.

Weiterhin kann der Filter ein Hochpassfilter sein. Zweckmäßigerweise wird durch den Hochpassfilter die Offset-Spannung im Signal abgeschwächt bzw. aus dem Signal herausgefiltert. Weiterhin lässt der Hochpassfilter vorzugsweise denjenigen Frequenzbereich passieren, in welchem mechanische Schwingungen des Objekts zu erwarten sind.

Ferner kann der Filter ein Tiefpassfilter sein. Vorzugsweise lässt der Tiefpassfilter denjenigen Frequenzbereich passieren, in welchem mechanische Schwingungen des Objekts zu erwarten sind. Zweckmäßigerweise werden durch den Tiefpassfilter höhere Frequenzen als die zu erwartenden Frequenzen der mechanischen Schwingungen abgeschwächt bzw. herausgefiltert. Weiterhin kann das Signal des Beschleunigungssensors mithilfe einer Filterkombination aus mehreren unterschiedlichen Filtern gefiltert werden.

In einer vorteilhaften Ausführung der Erfindung ist der Referenzwert ein Maximalwert eines Messbereichs des Beschleunigungssensors. Als Maximalwert kann das Maximum des Messbereichs des Beschleunigungssensors aufgefasst werden. Vorzugsweise wird bei der Prüfung geprüft, ob die Größe, insbesondere ein gemittelter Signalwert und/oder ein gemittelter Beschleunigungswert, ein vorgegebenes Vielfaches des Referenzwerts überschreitet. Das Vielfache kann eine rationale Zahl sein. Weiter kann das Vielfache auch Eins sein, d.h. es kann geprüft werden, ob die Größe den Referenzwert überschreitet.

Wenn die Größe das vorgegebene Vielfache des Referenzwerts überschreitet, dann liegt in der Regel ein Defekt des Beschleunigungssensors vor. Zweckmäßigerweise wird es als Defekt des Beschleunigungssensors interpretiert bzw. wird ein Defekt des Beschleunigungssensors erkannt, wenn die Größe das vorgegebene Vielfache des Referenzwerts überschreitet. Ferner kann mittels der Prüfung ein Filter, insbesondere ein dem Beschleunigungssensor nachgeschalteter Filter, auf seine Funkionsfähigkeit hin überprüft werden. Z.B. kann ein Defekt des Filters vorliegen, wenn die Größe das vorgegebene Vielfache des Referenzwerts überschreitet. Aufgrund des erkannten Defekts können/kann der Filter und/oder der Beschleunigungssensor überprüft werden und gegebenenfalls eine Reparatur bzw. ein Austausch des defekten Elements durchgeführt werden.

Weiter kann bei der Prüfung anhand einer Hilfsgröße, die unabhängig vom Signal des Beschleunigungssensors ermittelt wird, geprüft werden, ob die vom Signal abhängige Größe plausibel ist. Die Hilfsgröße kann beispielsweise eine Zustandsgröße sein, die einen Zustand des Objekts, in dem der Beschleunigungssensor angeordnet ist, charakterisiert. Z.B. kann die Hilfsgröße eine Geschwindigkeit des Objekts sein. Ferner kann die Hilfsgröße z.B. mithilfe eines Messgeräts, insbesondere mithilfe eines Geschwindigkeitsmessgeräts, ermittelt werden. Insbesondere kann bei der Prüfung geprüft werden, ob eine aus dem Signal ermittelte Beschleunigung bei einer unabhängig vom Beschleunigungssensor ermittelten Geschwindigkeit des Objekts plausibel ist.

In einer bevorzugten Ausgestaltung der Erfindung ist der Beschleunigungssensor, wie zuvor erwähnt, in bzw. an einem beweglichen Objekt angeordnet. In einer vorteilhaften Erfindungsvariante ist die Bedingung von einer Geschwindigkeit des Objekts abhängig. In diesem Fall ist der Referenzwert vorzugsweise von einer Geschwindigkeit des Objekts abhängig. Dies ermöglicht eine Prüfung, ob die vom Signal abhängige Größe bei der momentanen Geschwindigkeit des Objekts plausibel ist. Hierbei wird davon ausgegangen, dass bei einer bestimmten Geschwindigkeit des Objekts für die vom Signal des Beschleunigungssensors abhängige Größe bestimmte Werte zu erwarten sind.

Zweckmäßigerweise wird die Geschwindigkeit des Objekts mittels eines Geschwindigkeitsmessgeräts gemessenen. Weiter ist es zweckmäßig, wenn das Geschwindigkeitsmessgerät unabhängig vom Beschleunigungssensor arbeitet, sodass ein Defekt des Beschleunigungssensors nicht zwangsläufig mit einem Defekt bzw. einer Funktionsstörung des Geschwindigkeitsmessgeräts einhergeht.

Erfindungsgemäß ist das Objekt ein Schienenfahrzeug.

Das Geschwindigkeitsmessgerät kann beispielsweise einen Drehzahlsensor umfassen. Das heißt, die Geschwindigkeit des Objekts kann z.B. anhand einer vom Drehzahlsensor ermittelten Drehzahl bestimmt werden. Der Drehzahlsensor kann z.B. an einer rotierbaren Achse des Objekts, insbesondere an einer mit einem Rad des Objekts verbundenen Achse, platziert sein. Ein Stillstand des Objekts kann unter anderem von einem Bremssteuergerät bestimmt werden. Vorzugsweise ist es mithilfe des Bremssteuergeräts möglich, festzustellen, ob die Geschwindigkeit des Objekts eine vorgegebene Geschwindigkeitsuntergrenze (von z.B. 0,5 km/h) unterschreitet.

Das Geschwindigkeitsmessgerät und/oder das Bremssteuergerät sind/ist vorzugsweise dazu eingerichtet, die Geschwindigkeit des Objekts an die zuvor erwähnte Überwachungseinheit zu übermitteln.

Zweckmäßigerweise wird von einem Zeitzähler eine Zeit gezählt, insbesondere hoch- oder runtergezählt. Vorzugsweise wird die Zeit von dem Zeitzähler insbesondere von einem Start- bzw. Anfangswert bis zu einem vorgegeben bzw. vorgebbaren Zeitwert gezählt. Wenn die Zeit den vorgegebenen bzw. vorgebbaren Zeitwert erreicht, kann der Zeitzähler zurückgesetzt werden, insbesondere auf seinen Start- bzw. Anfangswert.

Falls die Geschwindigkeit des Objekts eine vorgegebene Geschwindigkeitsuntergrenze unterschreitet, wird vorzugsweise bei der Prüfung geprüft, ob die Größe den Referenzwert überschreitet bis die Zeit den vorgegebenen Zeitwert erreicht. Wenn die Größe den Referenzwert überschreitet bis die Zeit den vorgegebenen Zeitwert erreicht, dann kann ein Defekt des Beschleunigungssensors vorliegen. Zweckmäßigerweise wird es als Defekt des Beschleunigungssensors interpretiert bzw. wird ein Defekt des Beschleunigungssensors erkannt, wenn die Größe den Referenzwert überschreitet bis die Zeit den vorgegebenen Zeitwert erreicht.

Falls die Geschwindigkeit des Objekts eine vorgegebene Geschwindigkeitsuntergrenze unterschreitet, wird vorzugsweise bei der Prüfung ermittelt, wie oft die Größe den Referenzwert überschreitet bis die Zeit den vorgegebenen Zeitwert erreicht. In diesem Fall wird vorzugsweise bei der Prüfung weiterhin geprüft, ob die Anzahl an Überschreitungen eine vorgegebene Maximalanzahl überschreitet. Wenn die Anzahl an Überschreitungen die vorgegebene Maximalanzahl überschreitet bis die Zeit den vorgegebenen Zeitwert erreicht, dann kann ein Defekt des Beschleunigungssensors vorliegen. Zweckmäßigerweise wird es als Defekt des Beschleunigungssensors interpretiert bzw. wird ein Defekt des Beschleunigungssensors erkannt, wenn die Anzahl an Überschreitungen die vorgegebene Maximalanzahl überschreitet bis die Zeit den vorgegebenen Zeitwert erreicht.

Es ist bevorzugt, wenn die Anzahl an Überschreitungen von einem Überschreitungszähler ermittelt wird. Vorteilshafterweise wird der Überschreitungszähler zurückgesetzt, wenn die Anzahl an Überschreitungen geringer ist als die vorgegebene Maximalanzahl und die Zeit den vorgegebenen Zeitwert erreicht. Zweckmäßigerweise wird der Überschreitungszähler beim Zurücksetzen auf seinen Startwert bzw. Anfangswert, insbesondere auf Null, gestellt. Der Überwachungszähler kann eine separate Vorrichtungen sein oder als Softwarefunktion, z.B. in der Überwachungseinheit, realisiert sein.

Vorteilhafterweise wird die Zeit von diesem Zeitzähler nur gezählt, wenn die Geschwindigkeit des Objekts die vorgegebene Geschwindigkeitsuntergrenze unterschreitet. Der Zeitzähler kann angehalten werden, wenn die Geschwindigkeit des Objekts gleich der vorgegebenen Geschwindigkeitsuntergrenze oder oberhalb der vorgegebenen Geschwindigkeitsuntergrenze liegt. Ferner kann der Zeitzähler die Zeit weiterzählen, wenn die Geschwindigkeit des Objekts die vorgegebene Geschwindigkeitsuntergrenze erneut unterschreitet, insbesondere von dem Zeitwert, der bei der Unterbrechung erreicht wurde.

Alternativ kann der Zeitzähler auf seinen Start- bzw. Anfangswert zurückgesetzt werden, wenn die Geschwindigkeit des Objekts gleich der vorgegebenen Geschwindigkeitsuntergrenze oder oberhalb der vorgegebenen Geschwindigkeitsuntergrenze liegt.

Es ist vorteilhaft, wenn insbesondere während einer Wartung und/oder einer Instandsetzung des Objekts die Prüfung beendet und/oder der Überschreitungszähler deaktiviert werden kann. Auf diese Weise kann vermieden werden, dass beispielsweise aufgrund von Erschütterungen während der Wartung und/oder Instandsetzung Warnungen ausgegeben werden, weil die Größe den Referenzwert überschreitet bis die Zeit den vorgegebenen Zeitwert erreicht.

Zweckmäßigerweise wird von einem weiteren Zeitzähler vorzugsweise eine weitere Zeit gezählt, insbesondere hoch- oder runtergezählt. Vorteilhafterweise wird die Zeit von dem weiteren Zeitzähler insbesondere von einem Start- bzw. Anfangswert bis zu einem weiteren vorgegeben bzw. vorgebbaren Zeitwert gezählt. Der weitere Zeitwert kann sich von dem erstgenannten Zeitwert unterscheiden.

Falls die Geschwindigkeit des Objekts eine vorgegebene Geschwindigkeitsobergrenze überschreitet, wird vorteilhafterweise bei der Prüfung geprüft, ob die Größe jemals den vorgegebenen Referenzwert übersteigt bis die Zeit den weiteren vorgegebenen Zeitwert erreicht. Wenn die Größe niemals den vorgegebenen dritten Referenzwert übersteigt bis die Zeit den weiteren vorgegebenen Zeitwert erreicht, dann kann ein Defekt des Beschleunigungssensors vorliegen. Zweckmäßigerweise wird es als Defekt des Beschleunigungssensors interpretiert bzw. wird ein Defekt des Beschleunigungssensors erkannt, wenn die Größe niemals den vorgegebenen Referenzwert übersteigt bis die Zeit den weiteren vorgegebenen Zeitwert erreicht.

Vorzugsweise wird der letztgenannte Zeitzähler bei jeder Überschreitung des Referenzwerts zurückgesetzt, insbesondere auf seinen Start- bzw. Anfangswert. Vorteilhafterweise wird die Zeit von diesem Zeitzähler nur gezählt, wenn die Geschwindigkeit des Objekts die vorgegebene Geschwindigkeitsobergrenze überschreitet. Außerdem kann der weitere Zeitzähler angehalten werden, wenn die Geschwindigkeit des Objekts kleiner oder gleich der Geschwindigkeitsobergrenze ist. Wenn die Geschwindigkeit des Objekts die vorgegebene Geschwindigkeitsobergrenze erneut überschreitet, wird die Zeit vom weiteren Zeitzähler weitergezählt, insbesondere von dem Zeitwert, der bei der Unterbrechung erreicht wurde.

Der erstgenannte Zeitzäher und der letztgenannte Zeitzähler kann jeweils eine separate Vorrichtung sein oder als Softwarefunktion, z.B. in der Überwachungseinheit, realisiert sein.

Erfindungsgemäß ist der Beschleunigungssensor ein Sensor zum Messen einer Beschleunigung senkrecht zu einer Fahrtrichtung des Objekts. Das heißt, die Beschleunigung kann eine Querbeschleunigung sein. Zweckmäßigerweise misst der Beschleunigungssensor die tatsächliche Querbeschleunigung des Objekts, wenn er defektfrei bzw. störungsfrei ist. Im Falle eines Defekts des Beschleunigungssensors kann das vom Beschleunigungssensor erzeugte Signal unabhängig von der tatsächlichen Querbeschleunigung des Objekts sein.

Vorteilhafterweise wird, wenn ein Defekt des Beschleunigungssensors erkannt wird, eine Warnung ausgegeben. Die Warnung kann beispielsweise eine akustische und/oder eine optische Warnung sein. Liegt eine solche Warnung vor, kann der Beschleunigungssensor geprüft und gegebenenfalls repariert oder ausgetauscht werden.

Weiter ist es zweckmäßig, wenn bei einem erkannten Defekt des Beschleunigungssensors dieser Beschleunigungssensor nicht mehr zu einer Ermittlung einer Beschleunigung herangezogen wird. Insbesondere kann das Signal dieses Beschleunigungssensors als ungültig gesetzt werden. Außerdem kann dieser Beschleunigungssensor ausgeschaltet werden.

Erfindungsgemäß ist der Beschleunigungssensor in einem Schienenfahrzeug angeordnet. Der Beschleunigungssensor wird zu einer Laufstabilitätsüberwachung verwendet. Im Rahmen der Laufstabilitätsüberwachung werden erfindungsgemäß die Querbeschleunigung und/oder eine Querschwingung des Schienenfahrzeugs überwacht. Mithilfe der Laufstabilitätsüberwachung können Maßnahmen getroffen werden, um Gleisschäden und/oder ein Entgleisen des Schienenfahrzeugs zu vermeiden.

Zweckmäßigerweise werden mehrere Prüfungen durchgeführt, bei denen jeweils geprüft wird, ob eine vom Signal abhängige Größe eine vorgegebene Bedingung bezüglich eines Referenzwerts erfüllt. Bei den verschiedenen Prüfungen werden vorzugsweise unterschiedliche Bedingungen geprüft. Weiter können die verschiedenen Prüfungen für gleiche oder unterschiedliche vom Signal abhängige Größen durchgeführt werden. Insbesondere falls in verschiedenen Prüfungen dieselbe vom Signal abhängige Größe geprüft wird, wird diese Größe vorzugsweise bezüglich unterschiedlicher Referenzwerte geprüft.

Bei einer ersten Prüfung kann geprüft werden, ob eine vom Signal abhänge Größe eine erste vorgegebene Bedingung bezüglich eines ersten Referenzwerts erfüllt. Beispielsweise kann der erste Referenzwert ein Maximalwert eines Messbereichs des Beschleunigungssensors sein.

Ferner kann bei einer zweiten Prüfung geprüft werden, ob eine vom Signal abhänge Größe eine zweite vorgegebene Bedingung bezüglich eines zweiten Referenzwerts erfüllt. Vorzugsweise wird die zweite Prüfung durchgeführt, wenn die Geschwindigkeit des Objekts, in dem der Beschleunigungssensor zweckmäßigerweise angeordnet ist, die vorgegebene Geschwindigkeitsuntergrenze unterschreitet.

Außerdem kann bei einer dritten Prüfung geprüft werden, ob eine vom Signal abhänge Größe eine dritte vorgegebene Bedingung bezüglich eines dritten Referenzwerts erfüllt. Vorzugsweise wird die dritte Prüfung durchgeführt, wenn die Geschwindigkeit des Objekts, in dem der Beschleunigungssensor zweckmäßigerweise angeordnet ist, die vorgegebene Geschwindigkeitsobergrenze überschreitet. Der jeweilige Referenzwert, insbesondere der zweite und/oder der dritte Referenzwert, kann von der Geschwindigkeit des Objekts abhängig sein.

Die Erfindung betrifft außerdem ein Messsystem. Das Messsystem umfasst einen Beschleunigungssensor und eine Überwachungseinheit. Die Überwachungseinheit ist erfindungsgemäß dazu eingerichtet, einen Defekt des Beschleunigungssensors nach dem erfindungsgemäßen Verfahren und/oder nach mindestens einer der oben beschriebenen Weiterbildungen des Verfahrens zu erkennen.

Dieses Messsystem kann insbesondere im oben beschriebenen Verfahren eingesetzt werden. Ferner können im Zusammenhang mit dem Verfahren erwähnte gegenständliche Elemente, wie z.B. das Geschwindigkeitsmessgerät und die Software, Bestandteile dieses Messsystems sein.

Der Beschleunigungssensor ist zweckmäßigerweise zur Erzeugung eines Signals eingerichtet. Ferner ist die Überwachungseinheit zweckmäßigerweise dazu eingerichtet, zu prüfen, ob eine vom Signal des Beschleunigungssensors abhängige Größe eine vorgegebene Bedingung bezüglich eines Referenzwerts erfüllt. Weiter ist die Überwachungseinheit zweckmäßigerweise dazu eingerichtet, anhand der Prüfung zu ermitteln, ob der Beschleunigungssensor defekt ist.

Das Messsystem oder Teile davon kann/können in einem beweglichen Objekt, insbesondere in einem Fahrzeug, angeordnet sein. Ferner kann das Messsystem mehrere Beschleunigungssensoren umfassen.

Außerdem ist die Erfindung auf ein Schienenfahrzeug mit dem erfindungsgemäßen Messsystem gerichtet.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Messsystem kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet, aus dem Ausführungsbeispiel entfernt und/oder mit einem beliebigen der Ansprüche kombiniert werden.

Es zeigen:
- FIG 1: ein Schienenfahrzeug mit einem Messsystem, dass einen Beschleunigungssensor und eine Überwachungseinheit umfasst;
- FIG 2: ein erstes Diagramm, in dem eine Beschleunigung des Schienenfahrzeugs als Funktion der Zeit dargestellt ist;
- FIG 3: ein zweites Diagramm, in dem eine Beschleunigung des Schienenfahrzeugs als Funktion der Zeit dargestellt ist; und
- FIG 4: ein drittes Diagramm, in dem eine Beschleunigung sowie eine Geschwindigkeit des Schienenfahrzeugs als Funktion der Zeit dargestellt sind.

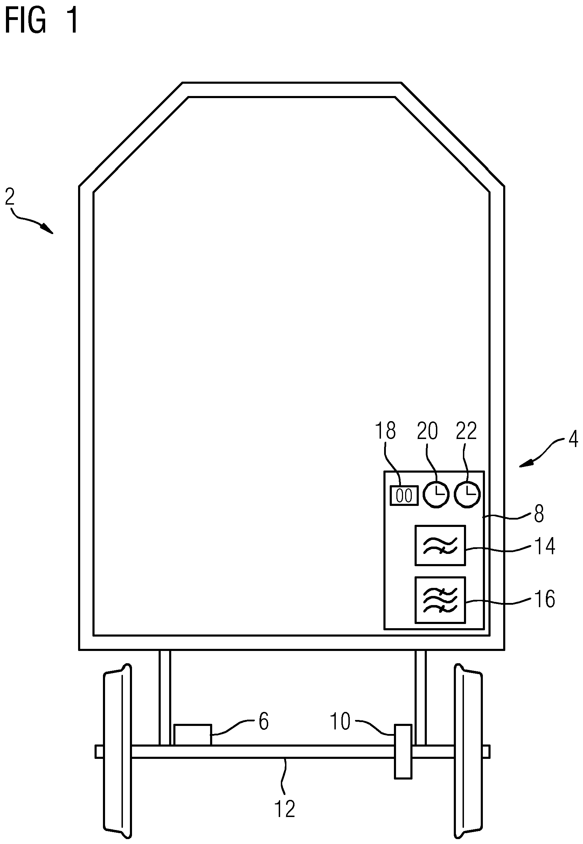

FIG 1 zeigt schematisch ein Schienenfahrzeug 2 mit einem Messsystem 4. Das Messsystem 4 umfasst einen Beschleunigungssensor 6 und eine Überwachungseinheit 8. Weiter umfasst das Schienenfahrzeug 2 ein Geschwindigkeitsmessgerät 10 zum Ermitteln einer Geschwindigkeit des Schienenfahrzeugs 2. Das Geschwindigkeitsmessgerät 10 umfasst einen Drehzahlsensor und ermittelt die Geschwindigkeit des Schienenfahrzeugs 2 anhand einer Drehzahl. Der Beschleunigungssensor 6 sowie das Geschwindigkeitsmessgerät 10 des Schienenfahrzeugs 2 sind an einer Radsatzachse 12 des Schienenfahrzeugs 2 angeordnet.

Die Überwachungseinheit 8 umfasst einen Hochpassfilter 14, einen Bandpassfilter 16, einen Überwachungszähler 18, einen ersten Zeitzähler 20 sowie einen zweiten Zeitzähler 22. Der erste Zeitzähler 20 zählt eine erste Zeit und der zweite Zeitzähler 22 zählt eine zweite Zeit. Der Überwachungszähler 18 sowie die Zeitzähler 20, 22 können jeweils eine separate Vorrichtung sein oder als Softwarefunktion in der Überwachungseinheit 8 realisiert sein.

Der Beschleunigungssensor 6 ist ein Sensor zum Messen einer Querbeschleunigung des Schienenfahrzeugs 2. Wenn der Beschleunigungssensor 6 störungsfrei ist, misst der Beschleunigungssensor 6 demnach die Querbeschleunigung des Schienenfahrzeugs 2. Das heißt, der Beschleunigungssensor 6 erzeugt ein Signal in Form einer Spannung, die von der Querbeschleunigung des Schienenfahrzeugs 2 abhängig ist. Eine aus dem Signal berechnete Querbeschleunigung entspricht demnach der wahren Querbeschleunigung, wenn der Beschleunigungssensor defektfrei bzw. störungsfrei ist. Bei einem Defekt des Beschleunigungssensors 6 entspricht die aus dem Signal berechnete Querbeschleunigung dagegen nicht notwendigerweise der wahren Querbeschleunigung des Schienenfahrzeugs 2.

Die Messung der Querbeschleunigung des Schienenfahrzeugs 2 dient einer Laufstabilitätsüberwachung des Schienenfahrzeugs 2.

Ferner ist die Überwachungseinheit 8 zur Erkennung eines Defekts des Beschleunigungssensors 6 eingerichtet. Die Überwachungseinheit 8 prüft, ob eine vom Signal des Beschleunigungssensors 6 abhängige Größe eine vorgegebene Bedingung bezüglich eines Referenzwerts erfüllt, und ermittelt anhand der Prüfung, ob der Beschleunigungssensor 6 defekt ist. Die vom Signal abhängige Größe ist die Querbeschleunigung, die aus dem Signal ermittelt wird. Insbesondere wird bei der Prüfung geprüft, ob Beschleunigungswerte der Querbeschleunigung eine vorgegebene Bedingung bezüglich eines Referenzwerts erfüllen.

Im vorliegenden Ausführungsbeispiel ist der Bandpassfilter 16 ein Filter für den Frequenzbereich von 3 bis 9 Hz. In dem Frequenzbereich von 3 bis 9 Hz treten typischerweise mechanische Schwingungen aufgrund von Querbeschleunigungen des Schienenfahrzeugs 2 auf. Demnach lässt der Bandpassfilter 16 den Frequenzbereich von 3 bis 9 Hz passieren.

Das vom Beschleunigungssensor 6 erzeugte Signal wird gefiltert und gemittelt und die einzelnen Signalwerte werden durch eine eindeutige Umrechnungsvorschrift jeweils in einen Beschleunigungswert umgerechnet.

Danach werden drei Prüfungen durchgeführt, bei denen jeweils geprüft wird, ob die Querbeschleunigung eine vorgegebene Bedingung bezüglich eines Referenzwerts erfüllt. Bei den drei Prüfungen werden drei unterschiedliche Bedingungen bezüglich drei verschiedener vorgegebener Referenzwerte geprüft. Zwei der Bedingung sind von der Geschwindigkeit des Schienenfahrzeugs 2 abhängig. Bei diesen beiden Bedingungen wird davon ausgegangen, dass bei bestimmten Geschwindigkeiten des Schienenfahrzeugs 2 bestimmte Querbeschleunigungen zu erwarten sind. Werden solche Querbeschleunigungen nicht erreicht, wird ein Defekt des Beschleunigungssensors 6 angenommen bzw. erkannt. Die drei Prüfungen werden bezugnehmend auf die FIGen 2 bis 4 nachfolgend diskutiert.

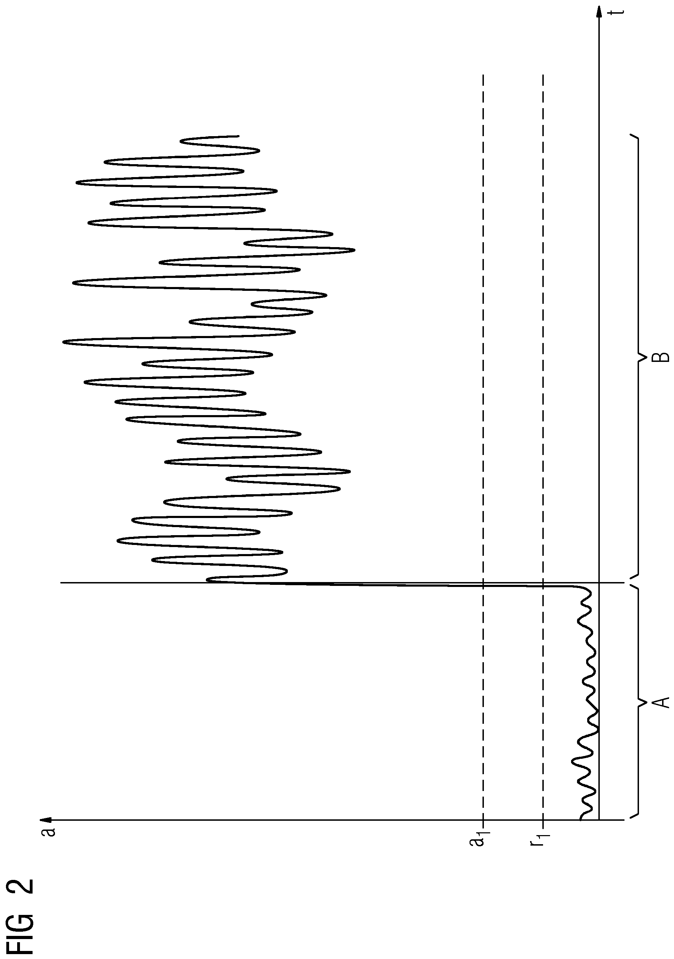

FIG 2 zeigt ein erstes Diagramm, in dem die Querbeschleunigung a des Schienenfahrzeugs 2, die mithilfe des Beschleunigungssensors 6 ermittelt wurde, als Funktion der Zeit t dargestellt ist. Dieses Diagramm dient der Veranschaulichung der ersten Prüfung.

Die erste Prüfung wird unabhängig von der Geschwindigkeit des Schienenfahrzeugs 2 durchgeführt. Bei der ersten Prüfung wird geprüft, ob die Querbeschleunigung a größer als ein erster Referenzwert r₁ ist. Der erste Referenzwert r₁ ist ein Maximalwerts des Messbereichs des Beschleunigungssensors 6.

Zur Berechnung der Querbeschleunigung a wird das Signal des Beschleunigungssensors 6 zur Überwachungseinheit 8 geleitet. In der Überwachungseinheit 8 wird das Signal mittels eines Bandpassfilters 16 gefiltert. Dann wird das gefilterte Signal von der Überwachungseinheit 8 mittels einer gleitenden Betrags-Mittelung über eine vorgegebene Zeitspanne gemittelt. Die Betrags-Mittelung bedeutet, dass zunächst aus jedem Signalwert der Betrag gebildet wird und anschließend eine arithmetische Mittelung über mehrere Signalwerte, die alle innerhalb der vorgegebenen Zeitspanne liegen, durchgeführt wird. Die vorgegebene Zeitspanne beträgt z.B. 0,5 s.

Dann werden die Signalwerte des gefilterten, gemittelten Signals durch eine Umrechnungsvorschrift in Beschleunigungswerte umgerechnet.

Der erste Referenzwert r₁ kann z.B. 10 m/s² betragen. Bei der ersten Prüfung wird geprüft, ob die Beschleunigungswerte ein vorgegebenes Vielfaches a₁ des ersten Referenzwerts r₁ übersteigen. Das Vielfache a₁ des ersten Referenzwerts r₁ kann z.B. das 1,5-fache des ersten Referenzwerts r₁ sein. Das heißt, die Querbeschleunigung a (bzw. jeder ermittelte Beschleunigungswert) wird mit dem Vielfachen a₁ des ersten Referenzwerts r₁, z.B. dem 1,5-fachen des ersten Referenzwerts r₁, verglichen.

Das Diagramm in FIG 2 ist in zwei Zeitintervalle A, B aufgeteilt, wobei das erste Zeitintervall A zeitlich vor dem zweiten Zeitintervall B liegt. Im ersten Zeitintervall A liegen die Beschleunigungswerte unter dem Vielfachen a₁ des ersten Referenzwerts r₁. Der Beschleunigungssensor 6 wird nach dieser ersten Prüfung im ersten Zeitintervall A als funktionsfähig eingestuft. Nach dem Zeitintervall A steigt die Querbeschleunigung a deutlich an, z.B. aufgrund eines Verdrahtungsfehlers im Beschleunigungssensor 6 oder aufgrund einer Einkopplung eines Fremdsignals. Im zweiten Zeitintervall B überschreiten die Beschleunigungswerte das Vielfache a₁ des ersten Referenzwerts r₁, sodass ein Defekt des Beschleunigungssensors 6 erkannt wird und eine Warnung ausgegeben wird.

Ferner wird mittels der ersten Prüfung der Bandpassfilter 16 auf seine Funktionsfähigkeit hin überprüft. Z.B. kann auch ein Defekt des Bandpassfilters 16 vorliegen, wenn die Größe das vorgegebene Vielfache a₁ des ersten Referenzwerts r₁ überschreitet.

Aufgrund der ausgegeben Warnung können der Bandpassfilter 16 sowie der Beschleunigungssensor 6 überprüft werden und gegebenenfalls eine Reparatur bzw. ein Austausch des defekten Elements durchgeführt werden.

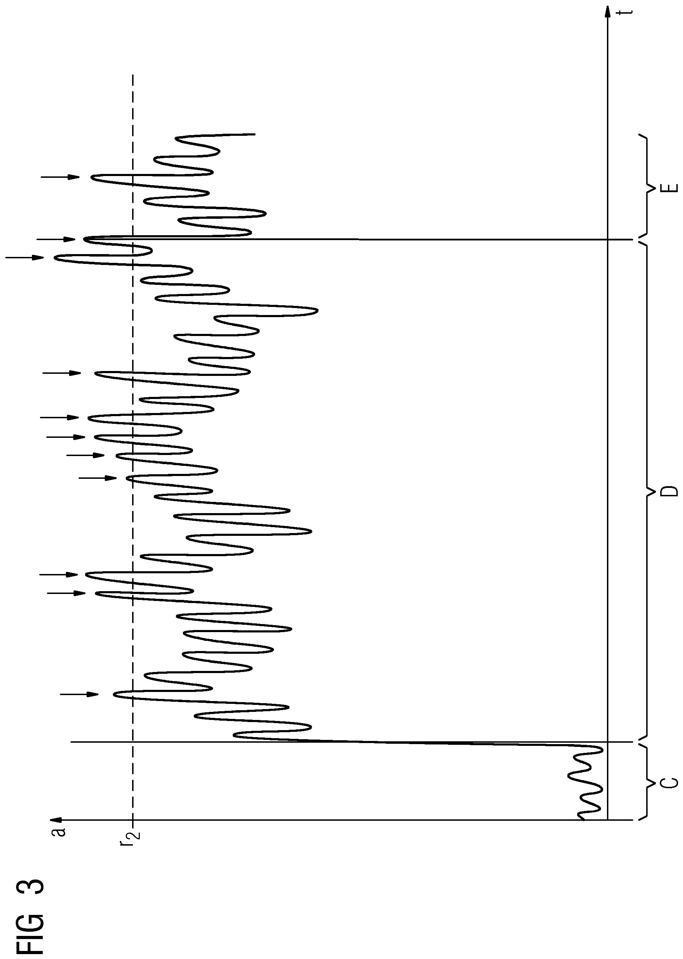

FIG 3 zeigt ein zweites Diagramm, in dem die Querbeschleunigung a des Schienenfahrzeugs 2, die mithilfe des Beschleunigungssensors 6 ermittelt wurde, als Funktion der Zeit t dargestellt ist. Dieses Diagramm dient der Veranschaulichung der zweiten Prüfung.

Die zweite Prüfung wird durchgeführt, wenn die Geschwindigkeit des Schienenfahrzeugs 2 die vorgegebene Geschwindigkeitsuntergrenze, z.B. 0,5 km/h, unterschreitet. Außerdem wird die zweite Prüfung bezüglich eines zweiten Referenzwertes r₂ durchgeführt.

Es wird davon ausgegangen, dass bei einer Geschwindigkeit des Schienenfahrzeugs 2 unter der Geschwindigkeitsuntergrenze nur Beschleunigungswerte unterhalb des zweiten Referenzwerts r₂ zu erwarten sind. Der Grund ist, dass normalerweise nur kleine Querbeschleunigungen a auf das Schienenfahrzeug 2 wirken, wenn das Fahrzeug sehr langsam fährt bzw. still steht. Werden dagegen Beschleunigungswerte oberhalb des zweiten Referenzwerts r₂ gemessen, wird ein Defekt des Beschleunigungssensors 6 angenommen bzw. erkannt.

Zur Berechnung der Querbeschleunigung a wird das Signal des Beschleunigungssensors 6 zur Überwachungseinheit 8 geleitet. In der Überwachungseinheit 8 wird das Signal des Beschleunigungssensors 6 mittels des Hochpassfilters 14 gefiltert, sodass eine Offset-Spannung im Signal abgeschwächt bzw. aus dem Signal herausgefiltert wird. Dann wird das hochpassgefilterte Signal mittels einer gleitenden quadratischen Mittelung über eine Zeitspanne von z.B. 0,5 s gemittelt.

Dann werden die Signalwerte des gefilterten, gemittelten Signals durch eine Umrechnungsvorschrift in Beschleunigungswerte umgerechnet.

Bei dieser zweiten Prüfung wird geprüft, ob der Beschleunigungswert den zweiten Referenzwert r₂ überschreitet, bis die erste Zeit, die vom ersten Zeitzähler 20 gezählt wird, einen vorgegebenen ersten Zeitwert erreicht. Der zweite Referenzwert r₂ kann z.B. 3,0 m/s² sein.

Das Diagramm in FIG 3 ist in drei Zeitintervalle C, D, E aufgeteilt, wobei das erste Zeitintervall C zeitlich vor dem zweiten Zeitintervall D liegt. Das zweite Zeitintervall D liegt wiederum zeitlich vor dem dritten Zeitintervall E.

Im ersten Zeitintervall C liegt die Querbeschleunigung a deutlich unter dem zweiten Referenzwert r₂. Nach dieser Prüfung wird der Beschleunigungssensor 6 im Zeitintervall C als funktionsfähig eingestuft. Nach dem ersten Zeitintervall C steigt die Querbeschleunigung a stark an, z.B. aufgrund eines Elektronikfehlers im bzw. am Beschleunigungssensor 6, und liegt in den nachfolgenden Zeitintervallen D und E in der Nähe des zweiten Referenzwertes r₂. Die Querbeschleunigung a überschreitet den zweiten Referenzwert r₂ in den Zeitintervallen D und E an den durch Pfeile gekennzeichneten Stellen.

Weiter wird bei der zweiten Prüfung ermittelt, wie oft die Querbeschleunigung a den zweiten Referenzwert r₂ überschreitet bis die erste Zeit den vorgegebenen ersten Zeitwert erreicht. Außerdem wird bei der Prüfung geprüft, ob die Anzahl an Überschreitungen eine vorgegebene Maximalanzahl, z.B. Neun, überschreitet. Die Anzahl an Überschreitungen wird von dem zuvor erwähnten Überschreitungszähler 18 gezählt.

Die Prüfung, ob die Anzahl an Überschreitungen eine vorgegebene Maximalanzahl überschreitet, wird durchgeführt, um auszuschließen, dass ein einmaliges Ereignis, wie z.B. eine Zugvorbeifahrt oder eine einmalige mechanische Einwirkung auf ein Drehgestell des Schienenfahrzeugs 2, eine Warnung aufgrund eines vermeintlichen Defekts des Beschleunigungssensors 6 zur Folge hat.

Falls - anders als im dargestellten Fall - die Anzahl geringer ist als die vorgegebene Maximalanzahl und die erste Zeit den vorgegebenen ersten Zeitwert erreicht, wird der Überschreitungszähler 18 auf Null zurückgesetzt.

Im dritten Zeitintervall E hat die Anzahl an Überschreitungen die vorgegebene Maximalanzahl überschritten und die erste Zeit hat den vorgegebenen ersten Zeitwert erreicht bzw. überschritten. Das heißt, bei einer vorgegebenen Maximalanzahl von z.B. Neun hat der Überschreitungszähler 18 z.B. Zehn (oder mehr) Überschreitungen gezählt bevor die erste Zeit den vorgegebenen ersten Zeitwert erreicht. Folglich wird ein Defekt des Beschleunigungssensors 6 erkannt. Eine Warnung wird ausgegeben und das Signal des Beschleunigungssensors 6 wird nicht mehr in die Auswertung der Laufstabilität des Schienenfahrzeugs 2 einbezogen.

Die erste Zeit wird von dem ersten Zeitzähler 20 von einem Startwert (z.B. 30 min) runtergezählt, wobei der erste Zeitzähler 20 auf den Startwert zurückgesetzt wird, wenn die erste Zeit den vorgegebenen ersten Zeitwert von Null erreicht. Der erste Zeitzähler 20 wird angehalten, wenn die Geschwindigkeit des Schienenfahrzeugs 2 gleich oder oberhalb der vorgegebenen Geschwindigkeitsuntergrenze liegt. Wenn die Geschwindigkeit des Schienenfahrzeugs 2 die vorgegebene Geschwindigkeitsuntergrenze wieder unterschreitet, läuft der Zeitzähler 20 weiter.

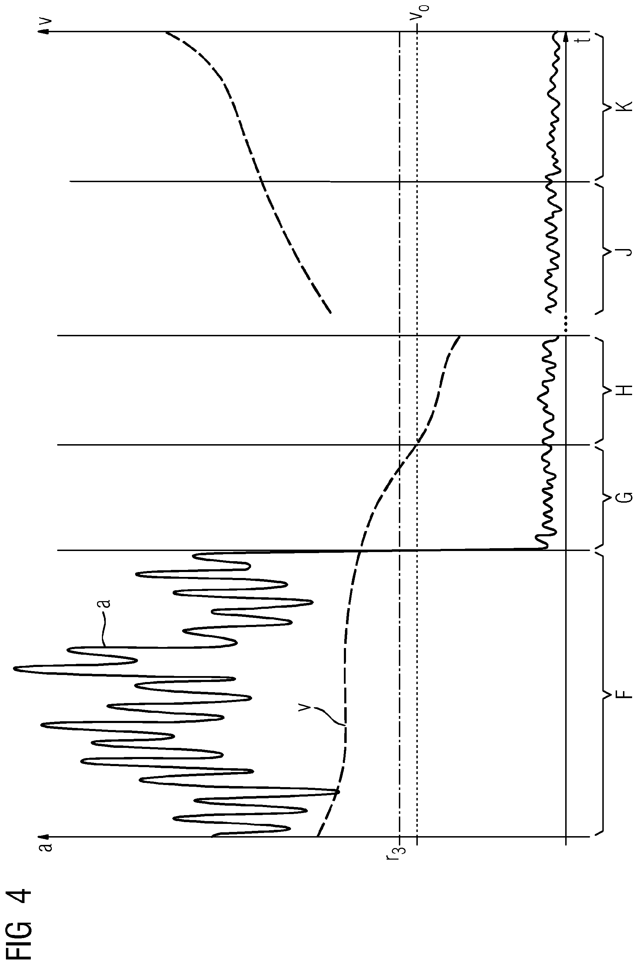

FIG 4 zeigt ein drittes Diagramm, in dem die Querbeschleunigung a sowie die Geschwindigkeit v des Schienenfahrzeugs 2 als Funktion der Zeit t dargestellt sind. Die Querbeschleunigung a wurde mithilfe des Beschleunigungssensors 6 ermittelt. Außerdem wurde die Geschwindigkeit v mithilfe des Geschwindigkeitsmessgeräts 10 ermittelt. Die Querbeschleunigung a ist als durchgezogene Linie dargestellt und die y-Achse für die Querbeschleunigung a ist zeichnungsgemäß links dargestellt. Weiter ist die Geschwindigkeit v als gestrichelte Linie dargestellt und die y-Achse für die Geschwindigkeit v zeichnungsgemäß rechts dargestellt. Dieses dritte Diagramm dient der Veranschaulichung der dritten Prüfung.

Die dritte Prüfung wird durchgeführt, wenn die Geschwindigkeit v des Schienenfahrzeugs 2 eine vorgegebene Geschwindigkeitsobergrenze vₒ, z.B. 160 km/h, überschreitet. Außerdem wird die dritte Prüfung bezüglich eines dritten Referenzwertes r₃ durchgeführt.

Bei dieser Prüfung wird davon ausgegangen, dass bei einer Geschwindigkeit v des Schienenfahrzeugs 2 oberhalb der Geschwindigkeitsobergrenze vₒ zumindest ein Teil der Beschleunigungswerte oberhalb des dritten Referenzwerts r₃ zu erwarten sind. Der Grund ist, dass normalerweise höhere Querbeschleunigungen a auf das Schienenfahrzeug 2 wirken, wenn das Fahrzeug schnell fährt. Übersteigen dagegen die Beschleunigungswerte niemals den dritten Referenzwert r₃, wird ein Defekt des Beschleunigungssensors 6 angenommen bzw. erkannt.

Zur Berechnung der Querbeschleunigung a wird das Signal des Beschleunigungssensors 6 zur Überwachungseinheit 8 geleitet.

In der Überwachungseinheit 8 wird das Signal mittels eines Bandpassfilters 16 gefiltert. Dann wird das gefilterte Signal von der Überwachungseinheit 8 mittels einer quadratischen Mittelung über z.B. 0,5 s gemittelt.

Dann werden die Signalwerte des gefilterten, gemittelten Signals durch eine Umrechnungsvorschrift in Beschleunigungswerte umgerechnet.

Bei der dritten Prüfung wird geprüft, ob die Querbeschleunigung a jemals den dritten Referenzwert r₃ übersteigt, bis die zweite Zeit einen vorgegebenen zweiten Zeitwert von z.B. 2 h erreicht. Der dritte Referenzwert r₃ kann z.B. 0,3 m/s² betragen.

Die zweite Zeit wird von dem zweiten Zeitzähler 22 von Null beginnend hochgezählt.

Das Diagramm im FIG 4 ist in fünf Zeitintervalle F, G, H, J, K aufgeteilt, wobei das erste Zeitintervall F zeitlich vor dem zweiten Zeitintervall G liegt. Das zweite Zeitintervall G liegt wiederum zeitlich vor dem dritten Zeitintervall H, welcher zeitlich vor dem vorletzten Zeitintervall J liegt. Das vorletzte Zeitintervall J liegt zeitlich vor dem letzten Zeitintervall K. Im ersten Zeitintervall F liegen die Beschleunigungswerte dauerhaft über dem dritten Referenzwert r₃, wohingegen die Querbeschleunigung a nach dem Zeitintervall F deutlich absinkt, z.B. aufgrund eines Kabelbruchs innerhalb des Beschleunigungssensors 6, und die Querbeschleunigung a nach dem Zeitintervall F dauerhaft unter dem dritten Referenzwert r₃ liegt.

Im ersten Zeitintervall F überschreitet die Geschwindigkeit v des Schienenfahrzeugs 2 die vorgegebene Geschwindigkeitsobergrenze vₒ. Die Querbeschleunigung a liegt in diesem Zeitintervall F - wie bereits erwähnt - ständig über dem dritten Referenzwert r₃. Der Beschleunigungssensor 6 wird im Zeitintervall F als voll funktionsfähig angesehen. In diesem Fall zählt der zweite Zeitzähler 22 die Zeit von Null beginnend hoch, wobei der zweite Zeitzähler 22 jedoch bei jeder Überschreitung des dritten Referenzwerts r₃ auf den Startwert von Null zurückgesetzt wird.

Im zweiten Zeitintervall G überschreitet die Geschwindigkeit v des Schienenfahrzeugs 2 die vorgegebene Geschwindigkeitsobergrenze vₒ, sodass die Zeit mittels des zweiten Zeitzählers 22 gezählt wird. Die Querbeschleunigung a nach dem Zeitintervall F liegt in diesem Zeitintervall G jedoch ständig unter dem dritten Referenzwert r₃, sodass der zweite Zeitzähler 22 nicht zurückgesetzt wird, d.h. die Zeit wird vom zweiten Zeitzähler 22 immer weitergezählt.

Im dritten Zeitintervall H ist die Geschwindigkeit v des Schienenfahrzeugs 2 kleiner oder gleich der vorgegebenen Geschwindigkeitsobergrenze vₒ, sodass der zweite Zeitzähler 22 angehalten wird, d.h. die Zeit nicht weitergezählt wird.

In FIG 4 ist die Zeitachse zwischen dem dritten Zeitintervall H und dem vorletzten Zeitintervall J unterbrochen und es können sich weitere Zeitintervalle an das dritte Zeitintervall H anschließen.

Im vorletzten Zeitintervall J überschreitet die Geschwindigkeit v des Schienenfahrzeugs 2 die vorgegebene Geschwindigkeitsobergrenze vₒ, sodass die Zeit mittels des zweiten Zeitzählers 22 weitergezählt wird. Die Querbeschleunigung a nach dem Zeitintervall F liegt in diesem Zeitintervall J ständig unter dem dritten Referenzwert r₃, sodass der zweite Zeitzähler 22 nicht zurückgesetzt wird. Am Ende vom Zeitintervall J erreicht der zweite Zeitzähler 22 den vorgegebenen zweiten Zeitwert.

Im letzten Zeitintervall K hat der zweite Zeitzähler 22 den zweiten Zeitwert erreicht bzw. überschritten. Die Querbeschleunigung a hat damit den vorgegebenen dritten Referenzwert r₃ niemals überstiegen bis die Zeit den vorgegebenen zweiten Zeitwert erreicht hat. Folglich wird im letzten Zeitintervall ein Defekt des Beschleunigungssensors 6 erkannt. Eine Warnung wird ausgegeben und das Signal des Beschleunigungssensors 6 wird nicht mehr in die Auswertung der Laufstabilität des Schienenfahrzeugs 2 einbezogen.

Das Schienenfahrzeug 2 kann prinzipiell noch weitere Beschleunigungssensoren aufweisen, die analog zu der in diesem Ausführungsbeispiel beschriebenen Weise auf einen Defekt hin überwacht werden können.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Verfahren zur Erkennung eines Defekts eines in einem Schienenfahrzeug angeordneten Beschleunigungssensors (6), bei dem der Beschleunigungssensor (6)
• ein Sensor zum Messen einer Beschleunigung (a) senkrecht zu einer Fahrtrichtung des Schienenfahrzeugs (2) ist,
• zu einer Laufstabilitätsüberwachung verwendet wird, bei welcher die Querbeschleunigung und eine Querschwingung des Schienenfahrzeugs (2) überwacht werden, und
• ein Signal erzeugt,
bei einer Prüfung geprüft wird, ob eine vom Signal abhängige Größe (a), die eine anhand des Signals ermittelte Beschleunigung ist, eine vorgegebene Bedingung bezüglich eines Referenzwerts (r₁, r₂, r₃) erfüllt, und anhand der Prüfung ermittelt wird, ob der Beschleunigungssensor (6) defekt ist.

2. Verfahren nach Anspruch 1,
**dadurch gekennzeichnet, dass** die vom Signal abhängige Größe (a) eine durch Mitteln mehrerer zeitlich aufeinanderfolgender Signalwerte berechnete Größe ist.

3. Verfahren nach einem der vorhergehenden Ansprüche,
**dadurch gekennzeichnet, dass** das Signal des Beschleunigungssensors (6) mithilfe eines Filters (14, 16), insbesondere eines Bandpassfilters (16) und/oder eines Hochpassfilters (14), gefiltert wird und die Prüfung für das gefilterte Signal durchgeführt wird.

4. Verfahren nach einem der vorhergehenden Ansprüche,
**dadurch gekennzeichnet, dass** der Referenzwert (r₁) ein Maximalwert eines Messbereichs des Beschleunigungssensors (6) ist und bei der Prüfung geprüft wird, ob die Größe (a) ein vorgegebenes Vielfaches des Referenzwerts (r₁) überschreitet.

5. Verfahren nach einem der vorhergehenden Ansprüche,
**dadurch gekennzeichnet, dass** der Beschleunigungssensor (6) in dem Schienenfahrzeug (2) angeordnet ist und die Bedingung, insbesondere der Referenzwert (r₂, r₃), von einer Geschwindigkeit (v) des Schienenfahrzeugs (2) abhängig ist, wobei die Geschwindigkeit (v) des Schienenfahrzeugs (2) mittels eines Geschwindigkeitsmessgeräts (10) gemessenen wird.

6. Verfahren nach Anspruch 5,
**dadurch gekennzeichnet, dass** von einem Zeitzähler (20) eine Zeit gezählt wird und, falls die Geschwindigkeit (v) des Schienenfahrzeugs (2) eine vorgegebene Geschwindigkeitsuntergrenze unterschreitet, bei der Prüfung geprüft wird, ob die Größe (a) den Referenzwert (r₂) überschreitet bis die Zeit einen vorgegebenen Zeitwert erreicht.

7. Verfahren nach Anspruch 5 oder 6,
**dadurch gekennzeichnet, dass** von einem Zeitzähler (20) eine Zeit gezählt wird und, falls die Geschwindigkeit (v) des Schienenfahrzeugs (2) eine vorgegebene Geschwindigkeitsuntergrenze unterschreitet, bei der Prüfung ermittelt wird, wie oft die Größe den Referenzwert (r₂) überschreitet bis die Zeit einen vorgegebenen Zeitwert erreicht und ob die Anzahl an Überschreitungen eine vorgegebene Maximalanzahl überschreitet, wobei die Anzahl an Überschreitungen von einem Überschreitungszähler (18) ermittelt wird und der Überschreitungszähler (18) zurückgesetzt wird, wenn die Anzahl an Überschreitungen geringer ist als die vorgegebene Maximalanzahl und die Zeit einen vorgegebenen Zeitwert erreicht.

8. Verfahren nach einem der Ansprüche 5 bis 7,
**dadurch gekennzeichnet, dass** von einem Zeitzähler (22) eine Zeit gezählt wird und, falls die Geschwindigkeit (v) des Schienenfahrzeugs (2) eine vorgegebene Geschwindigkeitsobergrenze (vₒ) überschreitet, bei der Prüfung geprüft wird, ob die Größe (a) jemals den vorgegebenen Referenzwert (r₃) übersteigt bis die Zeit einen vorgegebenen Zeitwert erreicht.

9. Verfahren nach Anspruch 8,
**dadurch gekennzeichnet, dass** der letztgenannte Zeitzähler (22) bei jeder Überschreitung des Referenzwerts (r₃) zurückgesetzt wird und die Zeit von diesem Zeitzähler (22) nur weitergezählt wird, wenn die Geschwindigkeit (v) des Schienenfahrzeugs (2) die vorgegebene Geschwindigkeitsobergrenze (vₒ) überschreitet.

10. Verfahren nach einem der vorhergehenden Ansprüche,
**dadurch gekennzeichnet, dass** eine Warnung ausgegeben wird, wenn ein Defekt des Beschleunigungssensors (6) festgestellt wird.

11. Messsystem (4) mit einem Beschleunigungssensor (6), der so eingerichtet ist, dass er in einem Schienenfahrzeug zur Laufstabilitätsüberwachung verwendet werden kann, und einer Überwachungseinheit (8), welche zur Erkennung eines Defekts des Beschleunigungssensors (6) nach einem Verfahren gemäß einem der vorhergehenden Ansprüche eingerichtet ist, wobei der Beschleunigungssensor
- ein Sensor zum Messen einer Beschleunigung (a) senkrecht zu einer Fahrtrichtung des Schienenfahrzeugs ist,
- so eingerichtet ist, dass er im Rahmen der Laufstabilitätsüberwachung des Schienenfahrzeugs die Querbeschleunigung und eine Querschwingung des Schienenfahrzeugs (2) überwacht, und
- zur Erzeugung eines Signals eingerichtet ist, und
die Überwachungseinrichtung dazu eingerichtet ist, zu prüfen, ob eine vom Signal abhängige Größe (a), die eine anhand des Signals ermittelte Beschleunigung ist, eine vorgegebene Bedingung bezüglich eines Referenzwerts (r1, r2, r3) erfüllt, und anhand der Prüfung ermittelt wird, ob der Beschleunigungssensor (6) defekt ist.

12. Schienenfahrzeug (2) mit einem Messsystem (4) nach Anspruch 11.

## Claims

1. Method for detecting a defect in an acceleration sensor (6) arranged in a rail vehicle, wherein the acceleration sensor (6)
• is a sensor for measuring an acceleration (a) at right angles to a direction of travel of the rail vehicle (2),
• is used for monitoring running stability, wherein the side acceleration and a side sway of the rail vehicle (2) are monitored, and
• a signal is produced,
wherein a test is carried out to check whether a variable (a) dependent on the signal, which is an acceleration determined using the signal, fulfils a predefined condition in respect of a reference value (r₁, r₂, r₃), and it is determined on the basis of the test whether the acceleration sensor (6) is defective.

2. Method according to claim 1,
**characterised in that** the signal-dependent variable (a) is a variable calculated by averaging a plurality of consecutive signal values.

3. Method according to one of the preceding claims,
**characterised in that** the signal of the acceleration sensor (6) is filtered using a filter (14, 16), in particular a bandpass filter (16) and/or a high-pass filter (14), and the test is carried out for the filtered signal.

4. Method according to one of the preceding claims,
**characterised in that** the reference value (r₁) is a maximum value of a measurement range of the acceleration sensor (6) and the test checks whether the variable (a) exceeds a predefined multiple of the reference value (r₁).

5. Method according to one of the preceding claims,
**characterised in that** the acceleration sensor (6) is disposed in the rail vehicle (2), and the condition, in particular the reference value (r₂, r₃), is dependent on a speed (v) of the rail vehicle (2), wherein the speed (v) of the rail vehicle (2) is measured by means of a speedometer (10).

6. Method according to claim 5,
**characterised in that** a time is counted by a time counter (20) and, if the speed (v) of the rail vehicle (2) is below a predefined lower speed limit, the test checks whether the variable (a) exceeds the reference value (r₂) by the time a predefined time value is reached.

7. Method according to claim 5 or 6,
**characterised in that** a time is counted by a time counter (20) and, if the speed (v) of the rail vehicle (2) is below a predefined lower speed limit, the test determines how often the variable exceeds the reference value (r₂) by the time a predefined time value is reached and whether the number of exceedances exceeds a predefined maximum number, wherein the number of exceedances is determined by an exceedance counter (18) and the exceedance counter (18) is reset if the number of exceedances is less than the predefined maximum number and the time reaches a predefined time value.

8. Method according to one of claims 5 to 7,
**characterised in that** a time is counted by a time counter (22) and, if the speed (v) of the rail vehicle (2) exceeds a predefined upper speed limit (vₒ), the test checks whether the variable (a) ever exceeds the predefined reference value (r₃) by the time a predefined time value is reached.

9. Method according to claim 8,
**characterised in that** the last mentioned time counter (22) is reset each time the reference value (r₃) is exceeded and the time only continues to be counted by this time counter (22) if the speed (v) of the rail vehicle (2) exceeds the predefined upper speed limit (vₒ).

10. Method according to one of the preceding claims,
**characterised in that** a warning is issued if an acceleration sensor defect (6) is detected.

11. Measuring system (4) comprising an acceleration sensor (6) which is designed so that it can be used in a rail vehicle for monitoring running stability, and a monitoring unit (8) which is designed to detect a defect in the acceleration sensor (6) using a method according to one of the preceding claims, wherein
the acceleration sensor
- is a sensor for measuring an acceleration (a) at right angles to a direction of travel of the rail vehicle,
- is designed so that within the scope of monitoring the running stability of the rail vehicle, it monitors the side acceleration and a side sway of the rail vehicle (2), and
- is designed to produce a signal, and the monitoring device is designed to check whether a variable (a), dependent on the signal, which is an acceleration determined using the signal, fulfils a predefined condition in respect of a reference value (r₁, r₂, r₃), and it is determined on the basis of the test whether the acceleration sensor (6) is defective.

12. Rail vehicle (2) having a measuring system (4) according to claim 11.

## Revendications

1. Procédé de détection d'une défaillance d'un capteur (6) d'accélération monté dans un véhicule ferroviaire, dans lequel le capteur (6) d'accélération
• est un capteur de mesure d'une accélération (a) perpendiculairement à une direction de circulation du véhicule (2) ferroviaire,
• est utilisé pour un contrôle de la stabilité de marche, dans lequel l'accélération transversale et un balancement transversal du véhicule (2) ferroviaire sont contrôlés, et
• produit un signal,
lors d'un contrôle, on contrôle si une grandeur (a), qui dépend du signal et qui est une accélération déterminée à l'aide du signal, satisfait une condition donnée à l'avance par rapport à une valeur (r₁, r₂, r₃) de référence et, à l'aide du contrôle, on détermine si le capteur (6) d'accélération est défaillant.

2. Procédé suivant la revendication 1,
**caractérisé en ce que** la grandeur (a), qui dépend du signal est une grandeur calculée par des moyennes de plusieurs valeurs de signal se succédant dans le temps.

3. Procédé suivant l'une des revendications précédentes,
**caractérisé en ce que** l'on filtre le signal du capteur (6) d'accélération à l'aide d'un filtre (14, 16), notamment d'un filtre (16) à bande passante et/ou d'un filtre (14) passe haut, et on effectue le contrôle sur le signal filtré.

4. Procédé suivant l'une des revendications précédentes,
**caractérisé en ce que** la valeur (r₁) de référence est une valeur maximum d'un domaine de mesure du capteur (6) d'accélération et, lors du contrôle, on contrôle si la grandeur (a) dépasse un multiple donné à l'avance de la valeur (r₁) de référence.

5. Procédé suivant l'une des revendications précédentes,
**caractérisé en ce que** le capteur (6) d'accélération est monté dans le véhicule (2) ferroviaire et la condition, notamment la valeur (r₂, r₃) de référence, dépend d'une vitesse (v) du véhicule (2) ferroviaire, la vitesse (v) du véhicule (2) ferroviaire étant mesurée au moyen d'un appareil (10) de mesure de la vitesse.

6. Procédé suivant la revendication 5,
caractérisé en ce l'on décompte un temps par un compteur (20) de temps et, si la vitesse (v) du véhicule (2) ferroviaire est inférieure à une limite inférieure de vitesse donnée à l'avance, on contrôle, lors du contrôle, si la grandeur (a) dépasse la valeur (r₂) de référence jusqu'à ce que le temps atteigne une valeur donnée à l'avance du temps.

7. Procédé suivant la revendication 5 ou 6,
**caractérisé en ce que** l'on décompte un temps par un compteur (20) de temps et, si la vitesse (v) du véhicule (2) ferroviaire est inférieure à une limite inférieure de vitesse donnée à l'avance, on détermine lors du contrôle la fréquence à laquelle la grandeur dépasse la valeur (r₂) de référence jusqu'à que le temps atteigne une valeur donnée à l'avance du temps et, si le nombre de dépassements dépasse un nombre maximum donné à l'avance, dans lequel on détermine le nombre des dépassements par un compteur (18) de déplacement et on remet à un état initial le compteur (18) de déplacement, si le nombre de déplacements est plus petit que le nombre maximum donné à l'avance et si le temps atteint une valeur donnée à l'avance du temps.

8. Procédé suivant l'une des revendications 5 à 7,
**caractérisé en ce que** l'on compte un temps par un compteur (22) de temps et, si la vitesse (v) du véhicule (2) ferroviaire dépasse une limite (v₀) supérieure de vitesse donnée à l'avance, on contrôle, lors du contrôle, si la grandeur (a) dépasse à un moment quelconque la valeur (r₃) de référence donnée à l'avance jusqu'à que le temps atteigne une valeur donnée à l'avance du temps.

9. Procédé suivant la revendication 8,
**caractérisé en ce que** l'on remet à l'état initial le compteur (22) de temps mentionné en dernier à chaque dépassement de la valeur (r₃) de référence et on ne continue à décompter, par ce compteur (22) de temps, que si la vitesse (v) du véhicule (2) dépasse la limite (v₀) supérieure de vitesse donnée à l'avance.

10. Procédé suivant l'une des revendications précédentes,
**caractérisé en ce que** l'on émet une alerte si l'on constate une défaillance du capteur (6) d'accélération.

11. Système (4) de mesure comprenant un capteur (6) d'accélération, qui est conçu de manière à pouvoir être utilisé dans un véhicule ferroviaire pour le contrôle de la stabilité de marche, et une unité (8) de contrôle, qui est conçue pour la détection d'une défaillance du capteur (6) d'accélération par un procédé suivant l'une des revendications précédentes, dans lequel le capteur d'accélération :
- est un capteur de mesure d'une accélération (a) perpendiculairement à une direction de circulation du véhicule ferroviaire,
- est conçu de manière à contrôler, dans le cadre du contrôle de la stabilité de marche du véhicule ferroviaire, l'accélération transversale et un balancement transversal du véhicule (2) ferroviaire, et
- est conçu pour la production d'un signal et le dispositif de contrôle est conçu pour contrôler si une grandeur (a), qui dépend du signal et qui est une accélération déterminée à l'aide du signal, satisfait une condition donnée à l'avance par rapport à une valeur (r1, r2, r3) de référence et, à l'aide du contrôle, on détermine si le capteur (6) d'accélération est défaillant.

12. Véhicule (2) ferroviaire ayant un système (4) de mesure suivant la revendication 11.
